# EUROPÄISCHE PATENTSCHRIFT

(11) **EP 4 366 980 B1**
(45) Veröffentlichungstag und Bekanntmachung des Hinweises auf die Patenterteilung: **17.09.2025**
(21) Anmeldenummer: 22743923.9
(22) Anmeldetag: 05.07.2022
(51) Int. Cl.: B60N 2/07, B60N 2/015, B60N 2/06

(54) **VORRICHTUNG ZUR BEFESTIGUNG EINES LÄNGSEINSTELLERS FÜR EINEN FAHRZEUGSITZ AN EINER FAHRZEUGSTRUKTUR, SOWIE FAHRZEUG**
DEVICE FOR FASTENING A LONGITUDINAL ADJUSTER FOR A VEHICLE SEAT TO A VEHICLE STRUCTURE, AND VEHICLE
DISPOSITIF DE FIXATION D'UN DISPOSITIF DE RÉGLAGE LONGITUDINAL D'UN SIÈGE DE VÉHICULE À UNE STRUCTURE DE VÉHICULE ET VÉHICULE

(30) Priorität: 06.07.2021 DE 102021117467; 01.09.2021 DE 102021122640
(43) Veröffentlichungstag der Anmeldung: 15.05.2024
(73) Patentinhaber: Adient US LLC, Plymouth MI 48170 (US)
(72) Erfinder: SPRENGER, Erik, 42929 Wermelskirchen (DE)
(74) Vertreter: Liedtke & Partner Patentanwälte
(86) Internationale Anmeldenummer: PCT/IB2022/056198
(87) Internationale Veröffentlichungsnummer: WO 2023/281389

(56) Entgegenhaltungen:
- EP-A1- 0 143 678
- DE-A1- 1 755 740
- US-B1- 6 299 121

## Beschreibung

Die Erfindung betrifft eine Vorrichtung zur Befestigung eines Längseinstellers, insbesondere für einen Fahrzeugsitz, an einer Fahrzeugstruktur, die Vorrichtung aufweisend wenigstens eine erste Schiene des Längseinsteller, wenigstens ein Bodenanbindungselement und wenigstens ein Verbindungselement, die erste Schiene aufweisend einen ersten Anschraubpunkt in einem vorderen Endbereich der ersten Schiene und einen zweiten Anschraubpunkt in einem hinteren Endbereich der ersten Schiene. Die Erfindung betrifft ferner ein Fahrzeug.

### Stand der Technik

Aus dem Serienbau von Kraftfahrzeugen ist es bekannt, einen Fahrzeugsitz mittels wenigstens einer Sitzschiene an der Karosserie des Kraftfahrzeugs zu halten. Mittels der Sitzschiene ist der Fahrzeugsitz in einer Mehrzahl von unterschiedlichen Längspositionen in Fahrzeuglängsrichtung an der Sitzschiene arretierbar.

Insbesondere bei Kleintransportern sind Vorrichtungen zur Befestigung von Längseinstellern bekannt, wobei ein Fahrzeugsitz von der Sitzschiene gelöst und aus einem Fahrgastraum entnommen werden kann, um so beispielsweise den Stauraum zu vergrößern. Alternativ ist es bekannt, den Fahrzeugsitz in eine Stauposition, insbesondere in eine sogenannte Easy-Package-Stellung, zu überführen, wodurch der rückwertige Stauraum ebenfalls vergrößert werden kann.

Aus der DE 17 55 740 A1 ist ein Spindelantrieb für eine Verstelleinrichtung zur Längsverstellung eines Kraftfahrzeugsitzes bekannt. Der Kraftfahrzeugsitz ist auf zwei parallelen Gleitschienen befestigt, die auf am Fahrzeugboden angeordneten Führungsschienen laufen. Parallel zu jeder Gleitschiene und mit dieser drehfest verbunden ist je eine Gewindespindel angeordnet. Neben den ortsfesten Führungsschienen und mit diesen fest verbunden ist ein Getriebeblock gelagert, der eine auf der Gewindespindel angeordnete Spindelmutter und eine mit dieser kämmende Antriebsschnecke aufnimmt. Die Antriebsschnecken jedes Getriebeblockes stehen mit einem gemeinsamen Antriebsmotor in Verbindung. Der Getriebeblock besteht aus zwei Teilen, die miteinander verschraubt sind. Wird der Antriebsmotor betätigt, werden über die Antriebsschnecken die Spindelmuttern verdreht. Da die Gewindespindel drehfest angeordnet ist, werden dadurch die Gewindespindel und der mit dieser verbundene Fahrzeugsitz relativ zum Getriebeblock und damit zum Fahrzeugboden verschoben.

Aus der US 2013/0214551 A1 ist eine Sitzstruktur für ein Fahrzeug bekannt, aufweisend mehrere Befestigungselemente, die in einer Längsrichtung des Fahrzeugs von vorne nach hinten voneinander beabstandet an einem Fahrzeugboden befestigt sind, und eine Gleitschiene. Die Gleitschiene aufweisend eine stationäre Aluminiumschiene, die von den Befestigungselementen gehalten ist, und eine bewegliche Schiene, die in Bezug auf die stationäre Schiene in eine vordere und eine hintere Richtung beweglich ist. Die Sitzstruktur weist ferner eine Eisenverstärkungsplatte auf, die an der stationären Schiene an einer Position innerhalb eines Sicherheitsgurt-Verwendungsbereichs mit den Befestigungselementen befestigt ist.

Aus der DE 203 08 015 U1 ist eine allgemeine Form eines Schlüssellochs bekannt.

Aus der FR 2 789 456 A1 ist ein Längseinsteller mit einer Führungsschiene bekannt, welche relativ zu einer Mittelebene auf einer mehrere Schlitze aufweisenden Bodenwanne eines Kraftfahrzeugs nahezu symmetrisch ausgerichtet ist. Bei der Montage wird der untere Teil der Führungsschiene in den Schlitzen verschoben, wobei die Führungsschiene quer und vertikal mittels einer Bajonettlängsmontage fixiert wird.

Ein weiterer Längseinsteller mit einer Bodenbefestigungsvorrichtung ist aus der US 6,299,121 B1 bekannt.

### Aufgabe

Der Erfindung liegt die Aufgabe zu Grunde, eine Vorrichtung zur Befestigung eines Längseinstellers eingangs genannter Art zu verbessern, insbesondere eine Vorrichtung zur Befestigung eines Längseinstellers bereitzustellen, mit welcher ein an einem Fahrzeugsitz vormontierter Längseinsteller mit wenig Aufwand sicher in einem Fahrzeug montierten und/oder bei Bedarf ausbauen lässt. Der Erfindung liegt weiter die Aufgabe zu Grunde, ein entsprechendes Fahrzeug bereitzustellen.

### Lösung

Diese Aufgabe wird erfindungsgemäß gelöst durch eine Vorrichtung zur Befestigung eines Längseinstellers, insbesondere für einen Fahrzeugsitz, an einer Fahrzeugstruktur, die Vorrichtung aufweisend wenigstens eine erste Schiene des Längseinsteller, wenigstens ein Bodenanbindungselement und wenigstens ein Verbindungselement, die erste Schiene aufweisend einen ersten Anschraubpunkt in einem vorderen Endbereich der ersten Schiene und einen zweiten Anschraubpunkt in einem hinteren Endbereich der ersten Schiene, wobei das wenigstens eine Bodenanbindungselement mit der Fahrzeugstruktur verbindbar ist, und das wenigstens eine Verbindungselement an einer Unterseite der ersten Schiene vorgesehen ist, wobei das wenigstens eine Verbindungselement zwischen dem ersten Anschraubpunkt und dem zweiten Anschraubpunkt angeordnet ist, und wobei das Bodenanbindungselement als Stufenbolzen oder Schulterbolzen ausgebildet ist, wobei das wenigstens eine Verbindungselement das wenigstens eine Bodenanbindungselement durch ein Verschieben der ersten Schiene entlang einer Längsrichtung derart umgreift und/oder in Anlage ist, dass ein Abheben der ersten Schiene in Vertikalrichtung verhindert ist.

Dadurch, dass das wenigstens eine Bodenanbindungselement mit der Fahrzeugstruktur verbindbar ist, und das wenigstens eine Verbindungselement mit einer Unterseite der ersten Schiene verbunden ist, wobei das wenigstens eine Verbindungselement zwischen dem ersten Anschraubpunkt und dem zweiten Anschraubpunkt angeordnet ist, und das wenigstens eine Verbindungselement das wenigstens eine Bodenanbindungselement durch ein Verschieben der ersten Schiene entlang einer Längsrichtung derart umgreift, dass ein Abheben der ersten Schiene in Vertikalrichtung verhindert ist, kann eine Befestigung des Längseinstellers, ggf. mit darauf montiertem Fahrzeugsitz, auf einfache Weise erfolgen. Besonders im Falle einer vergleichsweise langen ersten Schiene (verglichen mit einer verschiebbaren zweiten Schiene) deren in Längsrichtung mittlerer Bereich in vormontiertem Zustand nicht für eine herkömmliche, aus dem Stand der Technik bekannte Verschraubung mit dem Fahrzeugboden zugänglich ist, kann durch die erfindungsgemäße Lösung eine sichere Befestigung, insbesondere in dem mittleren Bereich, sicherstellbar sein.

Vorteilhafte Ausgestaltungen, welche einzeln oder in Kombination miteinander eingesetzt werden können, sind Gegenstand der Unteransprüche.

Der Längseinsteller kann wenigstens eine relativ zu der ersten Schiene verschiebbar angeordnete zweite Schiene aufweisen. Der Längseinsteller kann einen zwischen der ersten Schiene und zweiten Schiene angeordneten Spindelantrieb zum Verschieben der zweiten Schiene relativ zur ersten Schiene aufweisen. Die erste Schiene kann einen Basisabschnitt aufweisen. Die erste Schiene kann zwei an gegenüberliegenden Seiten des Basisabschnitts abstehende Schenkel aufweisen. Die erste Schiene kann einen im Wesentlichen U-förmigen Querschnitt aufweisen.

Der Spindelantrieb kann eine Spindel aufweisen. Die Spindel kann ein Außengewinde aufweisen. Der Spindelantrieb kann ein mittels eines Motors antreibbares Getriebe aufweisen. Das Getriebe kann in der zweiten Schiene gehalten sein.

Gemäß einer ersten Ausgestaltung des Spindelantriebs kann die Spindel mittels zweier Spindelhalter in der ersten Schiene fixiert gehalten sein. Gemäß der ersten Ausgestaltung des Spindelantriebs kann die Spindel rotationsfest gehalten sein. Gemäß der ersten Ausgestaltung des Spindelantriebs kann das Getriebe eine ein Innengewinde aufweisende Spindelmutter aufweisen, welche mit dem Außengewinde der Spindel wirkverbunden ist. Gemäß der ersten Ausgestaltung des Spindelantriebs kann das Getriebe durch Antrieb mittels des Motors entlang der Spindel verfahrbar sein.

Gemäß einer zweiten Ausgestaltung des Spindelantriebs kann die Spindel an einem Endabschnitt der Spindel drehfest mit dem Getriebe verbunden sein. Gemäß der zweiten Ausgestaltung des Spindelantriebs kann der Spindelantrieb einen in der ersten Schiene fixierten und ein Innengwinde aufweisenden Spindelblock aufweisen, welcher mit dem Außengewinde der Spindel wirkverbunden ist. Gemäß der zweiten Ausgestaltung des Spindelantriebs kann die Spindel drehbar in dem Spindelblock eingeschraubt sein. Gemäß der zweiten Ausgestaltung des Spindelantriebs kann der Spindelblock entlang der angetriebenen Spindel verfahrbar sein.

An einem Fahrzeugboden kann wenigstens ein Bodenanbindungselement angeordnet, insbesondere befestigt, sein. Die erste Schiene kann wenigstens ein Verbindungselement aufweisen. Das wenigstens eine Verbindungselement kann an einer Basis der ersten Schiene, insbesondere einer Unterseite der Basis der ersten Schiene, befestigt sein.

Das Verbindungselement kann einen Halteabschnitt aufweisen, mittels welchem das Verbindungselement mit der ersten Schiene verbunden ist. Das Verbindungselement kann einen Gabelabschnitt aufweisen. Der Gabelabschnitt kann eine gabelförmige Ausnehmung aufweisen. Der Gabelabschnitt kann mit dem Bodenanbindungselement zusammenwirken. Das wenigstens eine Verbindungselement ist bevorzugt im Bereich der Spindel des Längseinstellers angeordnet. Der Halteabschnitt kann ein Gummielement aufweisen. Das Gummielement kann an dem Halteabschnitt vormontiert sein. Das Gummielement kann zwischen dem Halteabschnitt und einem Bodenanbindungselement an der ersten Schiene anordenbar sein.

Die Vorrichtung kann mehrere Bodenanbindungselemente aufweisen. Das wenigstens eine Bodenanbindungselement kann an der Fahrzeugstruktur vormontiert sein. Das Bodenanbindungselement kann ein Schulterbolzen sein. Das Bodenanbindungselement ist bevorzugt, in einer Querrichtung betrachtet, unterhalb der Spindel des Längseinstellers angeordnet.

Die Vorrichtung umfasst wenigstens einen Verbindungsadapter. Der wenigstens eine Verbindungsadapter ist im Bereich des ersten Befestigungspunkts oder des zweiten Befestigungspunkts angeordnet. Die Vorrichtung kann zwei Verbindungsadapter aufweisen. Die Verbindungsadapter können je an einem in Längserstreckung der ersten Schiene vordersten und hintersten Befestigungspunkt angeordnet sein. Der erste Befestigungspunkt kann ein in Längsrichtung vorderster Anschraubpunkt sein. Der zweite Befestigungspunkt kann ein in Längsrichtung hinterster Anschraubpunkt sein. Der wenigstens eine Verbindungsadapter ist ein Abstandsprofil. Der wenigstens eine Verbindungsadapter kann einem Höhenausgleich dienen. Der wenigstens eine Verbindungsadapter kann eine Durchgangsöffnung aufweisen.

Die Vorrichtung kann wenigstens ein Fixierelement aufweisen. Die Vorrichtung kann zwei Fixierelemente aufweisen. Das Fixierelement kann eine Schraube oder ein Gewindebolzen sein. Das Fixierelement kann durch eine Öffnung der ersten Schiene und durch eine Durchgangsöffnung des Verbindungsadapters hindurch in einen mit der Fahrzeugstruktur verbundenen Gewindeabschnitt einschraubbar sein.

Die montierte Vorrichtung kann mittels des Fixierelements gegen eine Bewegung parallel der Fahrzeugstruktur sowie senkrecht der Fahrzeugstruktur gesichert sein.

Die zugrundeliegende Aufgabe wird ferner erfindungsgemäß gelöst, durch ein Fahrzeug mit einer Vorrichtung gemäß vorhergehender Beschreibung zur Befestigung eines Längseinstellers an einer Fahrzeugstruktur des Fahrzeugs. Das Fahrzeug kann einen Fahrzeugsitz, insbesondere Kraftfahrzeugsitz, aufweisen.

Der Fahrzeugsitz kann ein Sitzteil aufweisen. Der Fahrzeugsitz kann eine Lehne aufweisen. Die Lehne kann in ihrer Neigung relativ zu dem Sitzteil einstellbar sein. Der Fahrzeugsitz kann einen Längseinsteller aufweisen. Das Sitzteil kann mit dem Längseinsteller verbunden sein. Das Sitzteil kann mit der zweiten Schiene des Längseinstellers verbunden sein. Das Sitzteil kann mit der zweiten Schiene des Längseinstellers verschraubt sein.

Zusammenfassend und mit anderen Worten ausgedrückt, kann es gemäß der Erfindung vorgesehen sein, dass an Befestigungspunkten in einem Bereich unterhalb einer Spindel in einer ersten Schiene Bodenanbindungselemente oder Adapterteile, beispielsweise in Form eines Schulterbolzens oder Stufenbolzens, vorgesehen sind. Diese Bodenanbindungselemente werden bevorzugt vor einer Montage der ersten Schiene in das Fahrzeug befestigt, insbesondere verschraubt. An einer Unterseite der ersten Schiene sind Verbindungselemente mit einer gabelförmigen Ausnehmung oder sogenannten Schlüssellöchern angebracht. Bei der Montage des Längseinstellers in das Fahrzeug werden die Schienen erst etwas versetzt ins Fahrzeug gesetzt, um die Öffnung der gabelförmigen Ausnehmungen oder der Schlüssellöcher zu passieren. Anschließend werden die Schienen in Längsrichtung verschoben um die Verbindung zwischen den Verbindungselementen und einem kooperierenden Bodenanbindungselement in Eingriff zu setzen. Abschließend werden Fixierelemente als Direktverschraubungen vor und hinter der Spindel eingeschraubt, um den Fahrzeugsitz final mit dem Fahrzeug zu verbinden.

Um Klappergeräusche zu vermeiden kann ein Gummipuffer zwischen den Bodenanbindungselementen (Adapterteilen/Stufenbolzen) und den Verbindungselementen (Adaptern mit den Schlüssellöchern) an der ersten Schiene angebracht sein.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von zwei in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes mit einer erfindungsgemäßen Vorrichtung,
- Fig. 2:: einen Längsschnitt der erfindungsgemäßen Vorrichtung gemäß einem ersten Ausführungsbeispiel vor einer Montage an eine Fahrzeugstruktur,
- Fig. 3:: einen Längsschnitt der Vorrichtung gemäß dem ersten Ausführungsbeispiel von Fig. 2 während der Montage an die Fahrzeugstruktur,
- Fig. 4:: einen Längsschnitt der Vorrichtung gemäß dem ersten Ausführungsbeispiel von Fig. 2 nach der Montage an die Fahrzeugstruktur,
- Fig. 5:: ausschnittsweise einen Längsschnitt der Vorrichtung gemäß einem zweiten Ausführungsbeispiel im Bereich eines Verbindungselements,
- Fig. 6:: ausschnittsweise eine Ansicht von unten auf die Vorrichtung gemäß dem zweiten Ausführungsbeispiel im Bereich des Verbindungselements,
- Fig. 7:: einen Längsschnitt durch eine Schiene gemäß einem dritten Ausführungsbeispiel im Bereich eines Verbindungselements,
- Fig. 8:: eine Unteransicht der Schiene gemäß dem dritten Ausführungsbeispiel von Fig. 7 im Bereich des Verbindungselements,
- Fig. 9:: einen Längsschnitt einer Vorrichtung gemäß dem dritten Ausführungsbeispiel von Fig. 7 vor einer Montage an eine Fahrzeugstruktur,
- Fig. 10:: einen Längsschnitt der Vorrichtung gemäß dem dritten Ausführungsbeispiel von Fig. 7 während der Montage an die Fahrzeugstruktur, und
- Fig. 11:: einen Längsschnitt der Vorrichtung gemäß dem dritten Ausführungsbeispiel von Fig. 7 nach der Montage an die Fahrzeugstruktur.

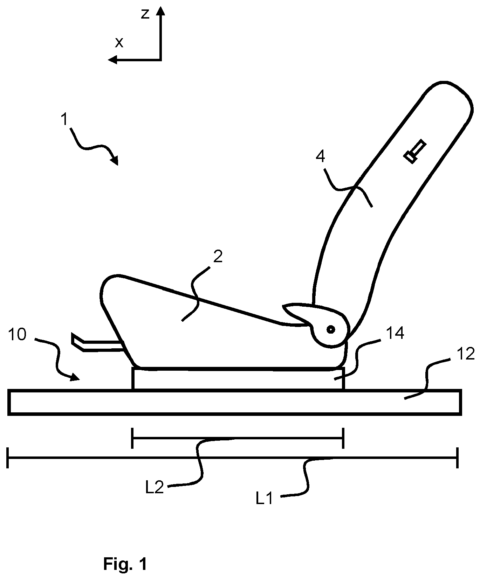

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der Fahrzeugsitz 1, insbesondere Kraftfahrzeugsitz, weist ein Sitzteil 2 und die Lehne 4 auf. Die Lehne 4 ist in ihrer Neigung relativ zu dem Sitzteil 2 einstellbar. Der Fahrzeugsitz 1 weist zur Einstellung einer Sitzlängsposition einen Längseinsteller 10 auf. Der Längseinsteller 10 weist wenigstens eine erste Schiene 12 mit einem ersten Anschraubpunkt 16 in einem vorderen Endbereich und einem zweiten Anschraubpunkt 18 in einem hinteren Endbereich auf. Vorliegend weist der Längseinsteller 10 ferner wenigstens eine relativ zu der ersten Schiene 12 verschiebbar angeordnete zweite Schiene 14 auf. Das Sitzteil 2 ist vorliegend mit der zweiten Schiene 14 des Längseinstellers 10 verbunden, insbesondere verschraubt. Zwischen dem Sitzteil 2 und der zweiten Schiene 14 des Längseinstellers 10 kann ferner eine nicht dargestellte Sitzhöheneinstellvorrichtung angeordnet sein.

Der Längseinsteller 10 weist vorliegend eine zweite Schiene 14 mit einer Länge L2 auf, wobei eine Länge L1 der ersten Schiene 12 größer ist als die Länge L2 der zweiten Schiene 14, insbesondere die Länge L1 der ersten Schiene 12 einem Vielfachen der Länge L2 der zweiten Schiene 14 entspricht. Bei dem vorliegenden Längseinsteller 10 handelt es sich um einen Längseinsteller 10 mit einem, verglichen mit einer herkömmlichen Vorrichtung zur Sitzlängseinstellung, verlängerten Einstellweg.

Die erste Schiene 12 und die zweite Schiene 14 des Längseinstellers 10 können ein erstes Schienenpaar ausbilden. Der Längseinsteller 10 kann ein aus darstellungstechnischen Gründen nicht gezeigtes zweites Schienenpaar, welches bevorzugt symmetrisch zu dem ersten Schienenpaar angeordnet ist, aufweisen.

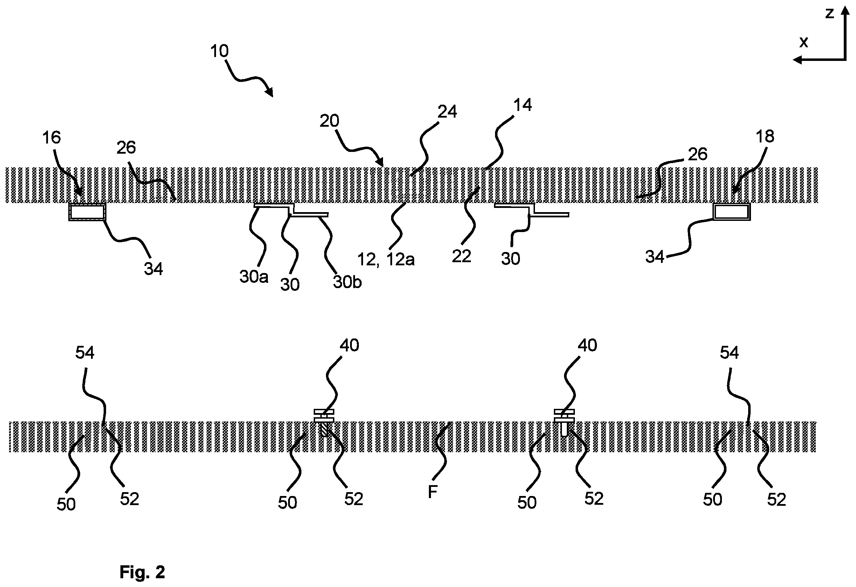

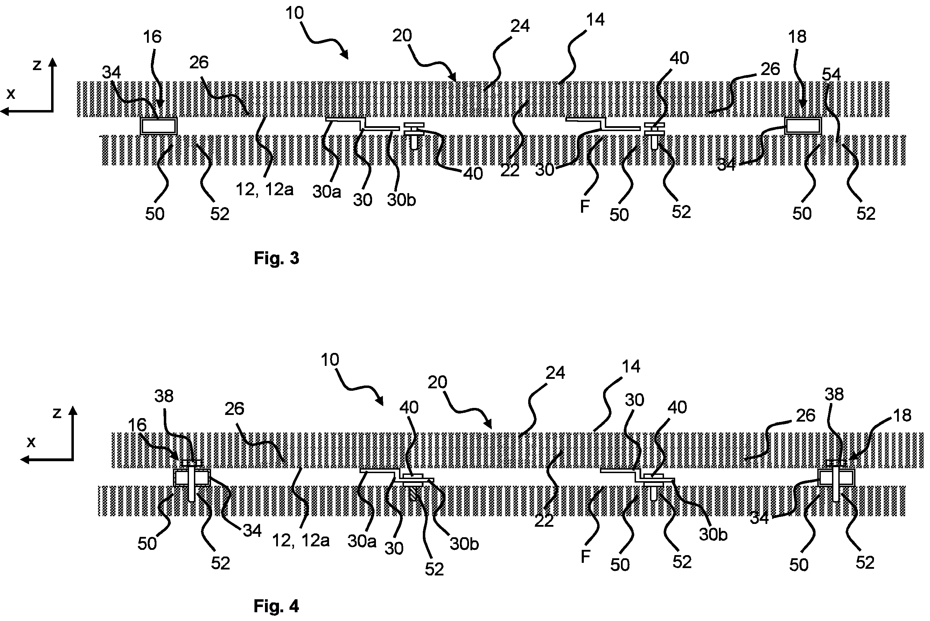

Die Figuren 2 bis 4 zeigen einen Längsschnitt der erfindungsgemäßen Vorrichtung in unterschiedlichen Zuständen vor, während und nach der Montage an einer Fahrzeugstruktur F.

Die Vorrichtung dient einer Befestigung des Längseinstellers 10 für den Fahrzeugsitz 1 an einer Fahrzeugstruktur F.

Der Längseinsteller 10 weist wenigstens eine erste Schiene 12, wenigstens eine relativ zu der ersten Schiene 12 verschiebbar angeordnete zweite Schiene 14, sowie einen zwischen der ersten Schiene 12 und zweiten Schiene 14 montierten Spindelantrieb 20 zum Verschieben der zweiten Schiene 14 relativ zur ersten Schiene 12 auf.

Der Spindelantrieb 20 weist eine Spindel 22 mit einem Außengewinde auf. Der Spindelantrieb 20 weist ein mittels eines Motors antreibbares Getriebe 24 auf. Das Getriebe 24 ist mit der zweiten Schiene 14, insbesondere mittels eines Getriebehalters, fest verbunden.

Vorliegend weist der Spindelantrieb 20 eine mittels zweier Spindelhalter 26 in der ersten Schiene 12 fixiert gehaltene Spindel 22 auf. Die Spindel 22 ist bevorzugt rotationsfest in den Spindelhaltern 26 gehalten. Die Spindelhalter 26 verbinden jeweils ein Ende der Spindel 22 mit einer Basis 12a der ersten Schiene 12. Das Getriebe 24 weist eine ein Innengewinde aufweisende Spindelmutter auf, welche mit dem Außengewinde der Spindel 22 wirkverbunden ist. Das Getriebe 24 ist durch Antrieb mittels des Motors entlang der Spindel 22 verfahrbar.

Die erste Schiene 12 weist wenigstens ein Verbindungselement 30, vorliegend zwei Verbindungselemente 30, auf. Die Verbindungselemente 30 weisen je einen Halteabschnitt 30a auf, mittels welchem das Verbindungselement 30 an der ersten Schiene 12 gehalten ist. Die Verbindungselemente 30 sind an einer Unterseite der Basis 12a der ersten Schiene 12 befestigt, bevorzugt verschweißt. Die Verbindungselemente 30 können alternativ jedoch auch verschraubt, vernietet oder anderweitig befestigt sein. Das Verbindungselement 30 weist an einem dem Halteabschnitt 30a fernen Ende einen Verbindungsabschnitt 30b auf. Der Verbindungsabschnitt 30b umfasst eine gabelförmige Ausnehmung. Das Verbindungselement 30 kann auch integral mit der Unterseite der Schiene 12 ausgebildet sein. Beispielsweise kann das Verbindungselement 30 an die Unterseite angespritzt oder angeformt sein.

Die Fahrzeugstruktur F ist vorliegend mittels einer Mehrzahl an unterhalb eines Fahrzeugbodens angeordneten Trägerelementen 50 beispielhaft dargestellt. Die Trägerelemente 50 können beispielsweise entlang einer Fahrzeugquerrichtung verlaufende U-förmige Trägerprofile sein. Die Trägerelemente 50 stellen für den ersten Befestigungspunkt 16 und den zweiten Befestigungspunkt 18 je einen Gewindeträger 52, beispielsweise eine Schweißmutter oder dergleichen, bereit.

An der Fahrzeugstruktur F, insbesondere einem Fahrzeugboden, ist wenigstens ein Bodenanbindungselement 40 angeordnet. Vorliegend sind zwei Bodenanbindungselemente 40 angeordnet. Die Bodenanbindungselemente 40 können in Abhängigkeit der Länge L1 der ersten Schiene 12 in gewünschter Anzahl vorgesehen werden. Die Fahrzeugstruktur F weist Montageöffnungen 54 zum Einschrauben der Bodenanbindungselemente 40 auf. Die zwei Bodenanbindungselemente 40 sind an der Fahrzeugstruktur F vormontiert. Die Bodenanbindungselemente 40 sind als Schulterbolzen oder Stufenbolzen ausgestaltet.

Die Bodenanbindungselemente 40 umfassen jeweils einen Basiskörper 42 und zumindest zwei voneinander axial beabstandete und mit dem Basiskörper 42 verbundene Flanschabschnitte 44, 46. Ein oberer Flanschabschnitt 44 kann als Pilzkopf oder Bolzenkopf ausgebildet sein. Ein unterer Flanschabschnitt 46 kann als eine Schulter oder Stufe ausgebildet sein. Beide Flanschabschnitte 44, 46 stehen radial vom Basiskörper 42 ab. Die Verbindungselemente 30 umgreifen durch ein Verschieben der ersten Schiene 12 entlang einer Längsrichtung x die zugehörigen Bodenanbindungselemente 40, insbesondere den Basiskörper 42 zwischen den beiden Flanschabschnitten 44, 46. Dadurch, dass die jeweilige gabelförmige Ausnehmung der Verbindungselemente 30 den Basiskörper 42 zwischen den Flanschabschnitten 44, 46 umgreift, ist die Schiene 12 auch gegen eine ungewollte Verschiebung in Vertikalrichtung z während und auch nach der Montage gesichert. Die Vorrichtung kann demnach eine so genannte Pilzkopfverriegelung aufweisen.

Die Vorrichtung weist zudem wenigstens einen Verbindungsadapter 34, vorliegend zwei Verbindungsadapter 34, auf. Die Verbindungsadapter 34 sind als Abstandsprofile ausgestaltet und je an einem in Längserstreckung der ersten Schiene 12, insbesondere parallel zur Längsrichtung x, vordersten ersten Befestigungspunkt 16 und hintersten zweiten Befestigungspunkt 18 angeordnet. Durch die Verbindungsadapter 34 lässt sich ein für die Verbindung zwischen den Verbindungselementen 30 und den Bodenanbindungselementen 40 benötigter Höhenunterschied ausgleichen.

Die Vorrichtung weist zwei Fixierelemente 38 auf, welche in Form einer Schraube oder eines Gewindebolzens ausgestaltet sein kann. Das Fixierelement 38 ist durch eine Öffnung der ersten Schiene 12 und durch eine Durchgangsöffnung des Verbindungsadapters 34 hindurch in einen mit der Fahrzeugstruktur F verbundenen Gewindeträger 52 einschraubbar.

Der Verbindungsabschnitt 30b wirkt mit dem Bodenanbindungselement 40 zusammen. Das Verbindungselement 30 ist bevorzugt im Bereich der Spindel 22 des vormontierten Längseinstellers 10 angeordnet.

Das wenigstens eine Verbindungselement 30 kann das wenigstens eine Bodenanbindungselement 40, insbesondere durch ein Verschieben der ersten Schiene 12 relativ zur Fahrzeugstruktur F parallel zu der Längsrichtung x, derart umgreifen, dass ein Abheben der ersten Schiene 12 in Vertikalrichtung z verhindert ist. Das Bodenanbindungselement 40 ist bevorzugt im Bereich der Spindel 22 des vormontierten Längseinstellers 10 angeordnet.

Durch die Positionierung der Verbindungselemente 30 im Bereich der Spindel 22 des vormontierten Längseinstellers 10, sowie der entsprechenden Ausrichtung der Bodenanbindungselemente 40 hierzu, lässt sich einen Verbindungsmöglichkeit der ersten Schiene 12 in einem mittleren Abschnitt, welcher durch die in der ersten Schiene 12 befestigte Spindel 22, insbesondere bei einem vormontierten Längseinsteller 10, zu einer Montage der ersten Schiene 12 an der Fahrzeugstruktur F nicht weiter zugänglich ist, in besonders vorteilhafter Weise bereitstellen. Wobei die Vorrichtung zur Befestigung des Längseinstellers 10 für des Fahrzeugsitz 1 an der Fahrzeugstruktur F sich bei Bedarf auch wieder ausbauen lässt, falls die Fahrzeugsitze 1 einer hinteren Sitzreihe zeitweise nicht benötigt werden.

Zur Befestigung des Längseinstellers 10 für den Fahrzeugsitz 1 an der Fahrzeugstruktur F, ist es vorgesehen, dass der vormontierte Längseinsteller 10 von oben auf die Fahrzeugstruktur F aufgesetzt wird. Anschließend wird der Längseinsteller 10 mit relativ zu den Bodenanbindungselementen 40 ausgerichteten Verbindungselementen 30 parallel der Längsrichtung x derart verschoben, dass die Verbindungsabschnitte 30b der Verbindungselemente 30 mit Bodenanbindungselementen 40 ein Eingriff gelangen. Abschließend werden die zwei Fixierelemente 38 durch eine jeweilige Öffnung der ersten Schiene 12 und durch die jeweilige Durchgangsöffnung des Verbindungsadapters 34 hindurch in den jeweiligen mit der Fahrzeugstruktur F verbundenen Gewindeträger 52 eingeschraubt. Durch das Einschrauben der Fixierelemente 38 ist der Längseinsteller 10 gegen eine Bewegung parallel der Fahrzeugstruktur F (in Längsrichtung x und/oder in Querrichtung y) sowie senkrecht der Fahrzeugstruktur F (in Vertikalrichtung z) und vor einem Lösen von der Fahrzeugstruktur F gesichert.

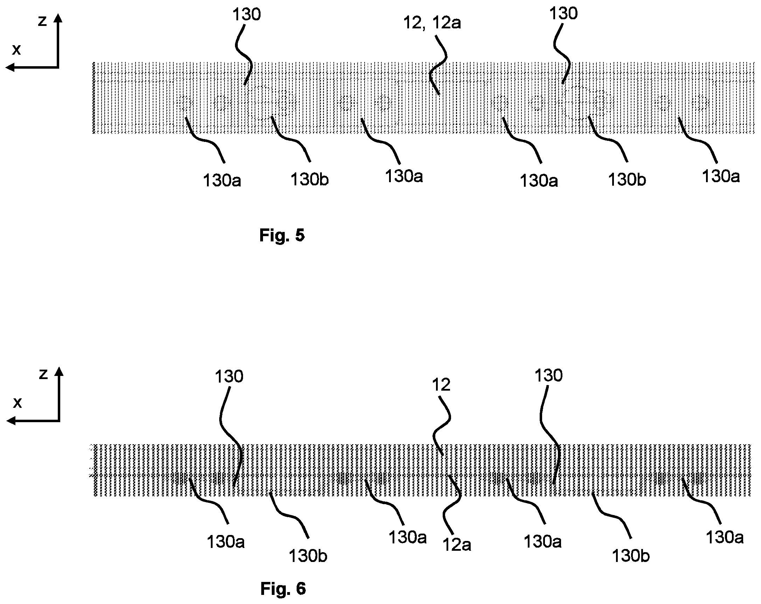

Die Figuren 5 und 6 zeigen ausschnittsweise eine erfindungsgemäße Vorrichtung gemäß eines zweiten Ausführungsbeispiels im Bereich eines Verbindungselements 130. Das Verbindungselement 130 entspricht sofern nachfolgend nicht explizit abweichend beschrieben dem Verbindungselement 30 der zuvor beschriebenen Vorrichtung gemäß des ersten Ausführungsbeispiels.

Das Verbindungselement 130 weist vorliegend im Wesentlichen eine U-förmige Form mit um 90° nach außen gebogenen Enden auf. Das Verbindungselement 130 weist einen Verbindungsabschnitt 130b auf. Das Verbindungselement 130 weist an beiden in Längsrichtung x entgegengesetzten Enden des Verbindungsabschnitts 130b jeweils einen Halteabschnitt 130a auf. Der Verbindungsabschnitt 130b weist eine Öffnung auf, insbesondere eine Öffnung in Form eines Schlüssellochs.

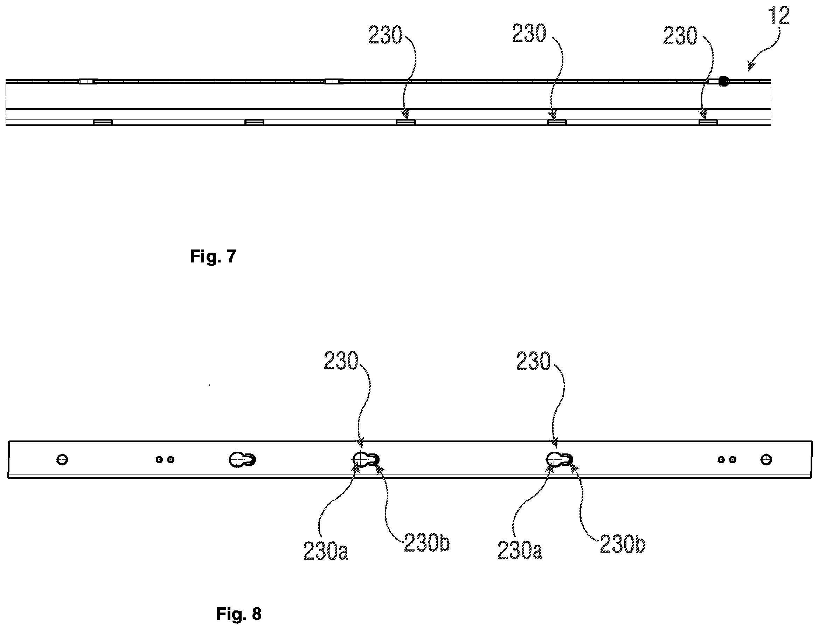

Figur 7 zeigt einen Längsschnitt durch eine Schiene 12 einer Vorrichtung gemäß einem dritten Ausführungsbeispiel im Bereich eines Verbindungselements 230. Insbesondere zeigt Figur 7 eine Mehrzahl von Verbindungselementen 230, die im vorliegenden Ausführungsbeispiel mit der Unterseite der Schiene 12 integral ausgebildet sind. Die Verbindungselemente 230 sind in die Unterseite der Schiene 12 eingebracht.

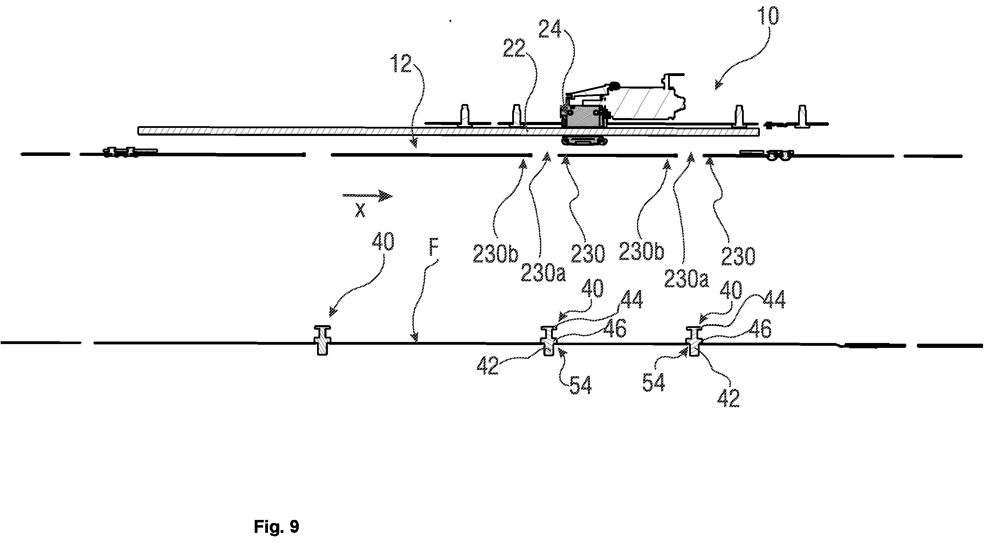

Die Verbindungselemente 230 umfassen jeweils eine in der Unterseite der ersten Schiene 12 ausgebildete Verbindungsöffnung 230a zur Aufnahme und/oder Durchführung eines zugehörigen Bodenanbindungselements 40, welches in den Figuren 9 bis 11 näher gezeigt ist und dem Bodenanbindungselement 40 der zuvor beschriebenen Vorrichtung gemäß des ersten Ausführungsbeispiels entspricht, sofern nachfolgend nicht explizit abweichend beschrieben. Die Verbindungsöffnung 230a ist in Form eines sogenannten Schlüssellochs ausgebildet. Die Verbindungsöffnung 230a kann alternativ eine gabelförmige Ausnehmung aufweisen.

Die Verbindungselemente 230 umfassen weiterhin jeweils einen Verbindungsanschlag 230b, welcher mit dem Bodenanbindungselement 40 zusammenwirkt. Der Verbindungsanschlag 230b ist an einem Öffnungsrand der Verbindungsöffnung 230a, an dem das jeweilige Bodenanbindungselement 40 eingeklemmt oder eingerastet wird, ausgebildet. Der Verbindungsanschlag 230b kann als Pufferelement, beispielsweise Gummielement, ausgebildet sein. Der Verbindungsanschlag 230b kann als Beschichtung in die Verbindungsöffnung 230a eingebracht sein. Das Pufferelement oder die Beschichtung können dämpfende und/oder absorbierende Eigenschaften aufweisen.

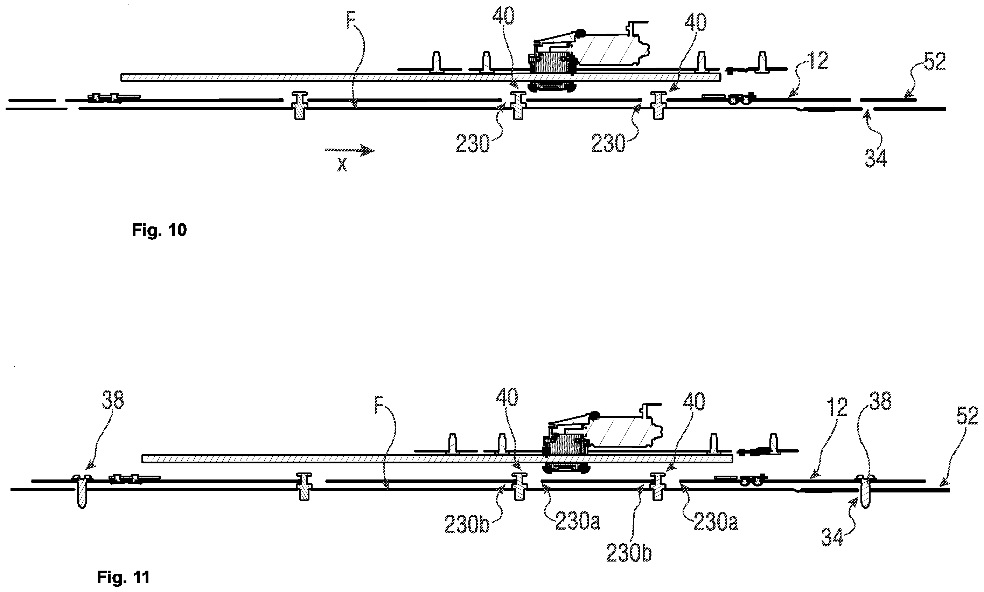

Das wenigstens eine Verbindungselement 230 kann das wenigstens eine Bodenanbindungselement 40, insbesondere durch ein Verschieben der ersten Schiene 12 relativ zur Fahrzeugstruktur F parallel zu der Längsrichtung x, derart aufnehmen, dass ein Abheben der ersten Schiene 12 in Vertikalrichtung z sowie eine weitere Verschiebung in die eine Längsrichtung x verhindert ist, wie in Figur 11 dargestellt. Das Bodenanbindungselement 40 ist bevorzugt im Bereich der Spindel 22 des vormontierten Längseinstellers 10 angeordnet.

Durch die Positionierung der Verbindungselemente 230 im Bereich der Spindel 22 des vormontierten Längseinstellers 10, sowie der entsprechenden Ausrichtung der Bodenanbindungselemente 40 hierzu, lässt sich eine Verbindungsmöglichkeit der ersten Schiene 12 in einem mittleren Abschnitt, welcher durch die in der ersten Schiene 12 befestigte Spindel 22, insbesondere bei einem vormontierten Längseinsteller 10, zu einer Montage der ersten Schiene 12 an der Fahrzeugstruktur F nicht weiter zugänglich ist, in besonders vorteilhafter Weise bereitstellen, wobei die Vorrichtung zur Befestigung des Längseinstellers 10 für den Fahrzeugsitz 1 an der Fahrzeugstruktur F sich bei Bedarf auch wieder ausbauen lässt, falls die Fahrzeugsitze 1 einer hinteren Sitzreihe zeitweise nicht benötigt werden.

Zur Befestigung des Längseinstellers 10 für den Fahrzeugsitz 1 an der Fahrzeugstruktur F, ist es vorgesehen, dass der vormontierte Längseinsteller 10 von oben auf die Fahrzeugstruktur F aufgesetzt wird. Anschließend wird der Längseinsteller 10 mit relativ zu den Bodenanbindungselementen 40 ausgerichteten Verbindungselementen 230 parallel der Längsrichtung x derart verschoben, dass die Verbindungsanschläge 230b der Verbindungselemente 230 an den Bodenanbindungselementen 40 in Anlage gelangen.

Figur 8 zeigt eine Unteransicht der ersten Schiene 12 gemäß dem dritten Ausführungsbeispiel von Figur 7 im Bereich der Verbindungselemente 230. Die Verbindungsanschläge 230b sind beispielsweise im Wesentlichen U-förmig oder C-förmig ausgebildet.

Figur 9 zeigt einen Längsschnitt einer Vorrichtung gemäß dem dritten Ausführungsbeispiel von Figur 7 vor einer Montage an eine Fahrzeugstruktur F. An der Fahrzeugstruktur F, insbesondere einem Fahrzeugboden, ist wenigstens ein Bodenanbindungselement 40 angeordnet. Vorliegend sind mehrere Bodenanbindungselemente 40 angeordnet. Die Bodenanbindungselemente 40 können in Abhängigkeit der Länge L1 der ersten Schiene 12 in gewünschter Anzahl vorgesehen werden. Die Fahrzeugstruktur F weist Montageöffnungen 54 zum Einschrauben der Bodenanbindungselemente 40 auf. Die Bodenanbindungselemente 40 sind an der Fahrzeugstruktur F vormontiert. Die Bodenanbindungselemente 40 sind als Schulterbolzen oder Stufenbolzen ausgestaltet.

Die Vorrichtung kann gegenüber dem ersten und zweiten Ausführungsbeispiel ohne Verbindungsadapter 34 befestigt werden. Dadurch, dass die Verbindungselemente 230 in die Unterseite der ersten Schiene 12 integral eingebracht sind, kann auf die Verwendung von Adaptern verzichtet werden. Eine weitere Kosteneinsparung und Bauraumoptimierung sind hiermit umgesetzt.

Die Bodenanbindungselemente 40 umfassen jeweils einen Basiskörper 42 und zumindest zwei voneinander axial beabstandete und mit dem Basiskörper 42 verbundene Flanschabschnitte 44, 46. Ein oberer Flanschabschnitt 44 kann als Pilzkopf oder Bolzenkopf ausgebildet sein. Ein unterer Flanschabschnitt 46 kann als eine Schulter oder Stufe ausgebildet sein. Beide Flanschabschnitte 44, 46 stehen radial vom Basiskörper 42 ab. Die Bodenanbindungselemente 40 können in den Verbindungselementen 230 verrasten oder formschlüssig eingeklemmt werden.

Figur 10 zeigt einen Längsschnitt der Vorrichtung gemäß dem dritten Ausführungsbeispiel von Figur 7 während der Montage an die Fahrzeugstruktur F. Die Verbindungselemente 230 nehmen die Bodenanbindungselemente 40 in Vertikalrichtung z auf und durch ein Verschieben der ersten Schiene 12 entlang einer Längsrichtung x können die Verbindungselemente 230 an den zugehörigen Bodenanbindungselementen 40, insbesondere am jeweiligen Basiskörper 42 zwischen den beiden Flanschabschnitten 44, 46 in Anlage gelangen. Dadurch, dass die jeweilige gabelförmige Ausnehmung der Verbindungselemente 230 oder die Verbindungsöffnung 230a den Basiskörper 42 zwischen den Flanschabschnitten 44, 46 umgreift und der jeweilige Verbindungsanschlag 230b mit dem Basiskörper 42 in Anlage gelangt, ist die erste Schiene 12 gegen eine ungewollte Verschiebung in Vertikalrichtung z sowie in Längsrichtung x während und auch nach der Montage gesichert. Die Vorrichtung kann demnach eine so genannte Pilzkopfverriegelung aufweisen.

Figur 11 zeigt einen Längsschnitt der Vorrichtung gemäß dem dritten Ausführungsbeispiel von Figur 7 nach der Montage an die Fahrzeugstruktur F. Abschließend werden zwei Fixierelemente 38 durch eine jeweilige Öffnung der ersten Schiene 12 und durch eine jeweilige in der Fahrzeugstruktur F vorgesehene Durchgangsöffnung hindurch eingeschraubt. Durch das Einschrauben der Fixierelemente 38 ist der Längseinsteller 10 gegen eine Bewegung parallel der Fahrzeugstruktur F (in Längsrichtung x und/oder in Querrichtung y) sowie senkrecht der Fahrzeugstruktur F (in Vertikalrichtung z) und vor einem Lösen von der Fahrzeugstruktur F gesichert. Die Vorrichtung weist zwei Fixierelemente 38 auf, welche in Form einer Schraube oder eines Gewindebolzens ausgestaltet sein kann. Das Fixierelement 38 ist durch eine Öffnung der ersten Schiene 12 und durch eine in der Fahrzeugstruktur F gebildete Durchgangsöffnung hindurch in einen mit der Fahrzeugstruktur F verbundenen Gewindeträger 52 einschraubbar.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, sofern sie von Schutzumfang der Ansprüche abgedeckt sind.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 10: Längseinsteller
- 12: erste Schiene
- 12a: Basis
- 14: zweite Schiene
- 16: erster Anschraubpunkt
- 18: zweiter Anschraubpunkt
- 20: Spindelantrieb
- 22: Spindel
- 24: Getriebe
- 26: Spindelhalter
- 30; 130; 230: Verbindungselement
- 30a; 130a: Halteabschnitt
- 30b; 130b: Verbindungsabschnitt
- 230a: Verbindungsöffnung
- 230b: Verbindungsanschlag
- 34: Verbindungsadapter
- 38: Fixierelement
- 40: Bodenanbindungselement
- 42: Basiskörper
- 44; 46: Flanschabschnitt
- 50: Trägerelement
- 52: Gewindeträger
- 54: Montageöffnung

- L1: Länge der ersten Schiene
- L2: Länge der zweiten Schiene
- F: Fahrzeugstruktur
- x: Längsrichtung
- y: Querrichtung
- z: Vertikalrichtung

## Patentansprüche

1. Vorrichtung zur Befestigung eines Längseinstellers (10), insbesondere für einen Fahrzeugsitz (1), an einer Fahrzeugstruktur (F), die Vorrichtung aufweisend wenigstens eine erste Schiene (12) des Längseinstellers (10), wenigstens ein Bodenanbindungselement (40) und wenigstens ein Verbindungselement (30; 130; 230), die erste Schiene (12) aufweisend einen ersten Anschraubpunkt (16) in einem vorderen Endbereich der ersten Schiene (12) und einen zweiten Anschraubpunkt (18) in einem hinteren Endbereich der ersten Schiene (12), wobei
das wenigstens eine Bodenanbindungselement (40) mit der Fahrzeugstruktur (F) verbindbar ist, und das wenigstens eine Verbindungselement (30; 130; 230) an einer Unterseite der ersten Schiene (12) vorgesehen ist, wobei das wenigstens eine Verbindungselement (30; 130; 230) zwischen dem ersten Anschraubpunkt (16) und dem zweiten Anschraubpunkt (18) angeordnet ist, und wobei das wenigstens eine Bodenanbindungselement (40) als Stufenbolzen oder Schulterbolzen ausgebildet ist, wobei das wenigstens eine Verbindungselement (30; 130; 230) das wenigstens eine Bodenanbindungselement (40) durch ein Verschieben der ersten Schiene (12) entlang einer Längsrichtung (x) derart umgreift und/oder in Anlage gelangt, dass ein Abheben der ersten Schiene (12) in Vertikalrichtung (z) verhindert ist,
**dadurch gekennzeichnet, dass** wenigstens ein Verbindungsadapter (34) im Bereich des ersten Anschraubpunkts (16) oder des zweiten Anschraubpunkts (18) angeordnet ist und ein Abstandsprofil ist.

2. Vorrichtung gemäß Anspruch 1, wobei das wenigstens eine Verbindungselement (30; 130) einen Halteabschnitt (30a; 130a) aufweist, mittels welchem das Verbindungselement (30; 130) mit der ersten Schiene (12) verbunden ist.

3. Vorrichtung gemäß einem der Ansprüche 1 bis 2, wobei das wenigstens eine Verbindungselement (30; 130) eine Verbindungsabschnitt (30b; 130b) aufweist.

4. Vorrichtung gemäß einem der Ansprüche 1 bis 3, wobei der Verbindungsabschnitt (30b; 130b) mit dem Bodenanbindungselement (40) zusammenwirkt.

5. Vorrichtung gemäß einem der Ansprüche 1 bis 4, wobei das wenigstens eine Verbindungselement (230) mit der Unterseite der ersten Schiene (12) integral ausgebildet ist.

6. Vorrichtung gemäß Anspruch 1, wobei das wenigstens eine Verbindungselement (230) eine in der Unterseite der ersten Schiene (12) ausgebildete Verbindungsöffnung (230a) umfasst, in die das Bodenanbindungselement (40) zumindest abschnittsweise einführbar ist.

7. Vorrichtung gemäß Anspruch 1, wobei das wenigstens eine Verbindungselement (230) einen Verbindungsanschlag (230b) aufweist, welcher mit dem Bodenanbindungselement (40) zusammenwirkt.

8. Vorrichtung gemäß einem der Ansprüche 6 bis 7, wobei der Verbindungsanschlag (230b) an einem Öffnungsrand der Verbindungsöffnung (230a) ausgebildet ist.

9. Vorrichtung gemäß einem der Ansprüche 1 bis 8, wobei das wenigstens eine Bodenanbindungselement (40) einen Basiskörper (42) und zumindest zwei voneinander axial beabstandete und mit dem Basiskörper (42) verbundene Flanschabschnitte (44; 46) aufweist, wobei das Verbindungselement (30; 130; 230) durch ein Verschieben der ersten Schiene (12) entlang einer Längsrichtung (x) das wenigstens eine Bodenanbindungselement (40) zwischen den beiden Flanschabschnitten (44; 46) umgreift und/oder mit dem Basiskörper (42) in Anlage gelangt.

10. Vorrichtung gemäß einem der Ansprüche 1 bis 9, wobei der Längseinsteller (10) wenigstens eine relativ zu der ersten Schiene (12) verschiebbar angeordnete zweite Schiene (14), und einen zwischen der ersten Schiene (12) und zweiten Schiene (14) angeordneten Spindelantrieb (20) zum Verschieben der zweiten Schiene (14) relativ zur ersten Schiene (12) aufweist.

11. Vorrichtung gemäß Anspruch 10, wobei das wenigstens eine Verbindungselement (30; 130; 230) in einer Querrichtung (y) betrachtet unterhalb der Spindel (22) des Längseinstellers (10) angeordnet ist.

12. Fahrzeug mit einer Vorrichtung gemäß Anspruch 1 zur Befestigung eines Längseinstellers (10) an einer Fahrzeugstruktur (F) des Fahrzeugs.

## Claims

1. Device for fastening a longitudinal adjuster (10), in particular for a vehicle seat (1), to a vehicle structure (F), the device comprising at least one first rail (12) of the longitudinal adjuster (10), at least one floor attachment element (40) and at least one connecting element (30; 130; 230), the first rail (12) having a first screw point (16) in a front end region of the first rail (12) and a second screw point (18) in a rear end region of the first rail (12),
wherein
the at least one floor attachment element (40) is connectable to the vehicle structure (F), and the at least one connecting element (30; 130; 230) is provided on a lower face of the first rail (12), wherein the at least one connecting element (30; 130; 230) is positioned between the first screw point (16) and the second screw point (18) and wherein the at least one floor attachment element (40) is designed as a step pin or shoulder pin, wherein the at least one connecting element (30; 130; 230) engages around and/or comes into abutment with the at least one floor attachment element (40) when the first rail (12) is displaced in a longitudinal direction (x), in such a way that the first rail (12) is prevented from lifting off in the vertical direction (z),
**characterized in that**
at least one connecting adaptor (34) is arranged in the region of the first screw point (16) or the second screw point (18) and is a spacer profile.

2. Device according to Claim 1, wherein the at least one connecting element (30; 130) has a holding portion (30a; 130a), the connecting element (30; 130) being connected thereby to the first rail (12).

3. Device according to one of Claims 1 to 2, wherein the at least one connecting element (30; 130) has a connecting portion (30b; 130b).

4. Device according to one of Claims 1 to 3, wherein the connecting portion (30b; 130b) cooperates with the floor attachment element (40).

5. Device according to one of Claims 1 to 4, wherein the at least one connecting element (230) is configured integrally with the lower face of the first rail (12).

6. Device according to Claim 1, wherein the at least one connecting element (230) comprises a connecting opening (230a) which is configured in the lower face of the first rail (12) and into which the floor attachment element (40) is insertable at least in some portions.

7. Device according to Claim 1, wherein the at least one connecting element (230) has a connecting stop (230b) which cooperates with the floor attachment element (40).

8. Device according to one of Claims 6 to 7, wherein the connecting stop (230b) is configured on an opening edge of the connecting opening (230a).

9. Device according to one of Claims 1 to 8, wherein the at least one floor attachment element (40) comprises a base body (42) and at least two flange portions (44; 46) which are axially spaced apart from one another and which are connected to the base body (42), wherein the connecting element (30; 130; 230) engages around the at least one floor attachment element (40) between the two flange portions (44; 46) and/or comes into abutment with the base body (42) when the first rail (12) is displaced in a longitudinal direction (x).

10. Device according to one of Claims 1 to 9, wherein the longitudinal adjuster (10) has at least one second rail (14) which is displaceably arranged relative to the first rail (12), and a spindle drive (20) which is arranged between the first rail (12) and the second rail (14) for displacing the second rail (14) relative to the first rail (12).

11. Device according to Claim 10, wherein the at least one connecting element (30; 130; 230) is arranged below the spindle (22) of the longitudinal adjuster (10), when viewed in a transverse direction (y).

12. Vehicle having a device according to Claim 1 for fastening a longitudinal adjuster (10) to a vehicle structure (F) of the vehicle.

## Revendications

1. Dispositif destiné à fixer un système de réglage longitudinal (10), en particulier pour un siège (1) de véhicule, sur une structure (F) de véhicule, le dispositif comportant au moins un premier rail (12) du système de réglage longitudinal (10), au moins un élément d'attache au sol (40) et au moins un élément de liaison (30 ; 130 ; 230), le premier rail (12) comportant un premier point de vissage (16) dans une zone d'extrémité avant du premier rail (12) et un deuxième point de vissage (18) dans une zone d'extrémité arrière du premier rail (12),
l'au moins un élément d'attache au sol (40) pouvant être relié à la structure (F) de véhicule, et l'au moins un élément de liaison (30 ; 130 ; 230) étant prévu sur un côté inférieur du premier rail (12), l'au moins un élément de liaison (30 ; 130 ; 230) étant disposé entre le premier point de vissage (16) et le deuxième point de vissage (18), et l'au moins un élément d'attache au sol (40) étant réalisé comme un boulon étagé ou un boulon à épaulement, l'au moins un élément de liaison (30 ; 130 ; 230) entourant l'au moins un élément d'attache au sol (40) par un coulissement du premier rail (12) le long d'une direction longitudinale (x) et/ou parvenant en appui de telle manière que le premier rail (12) ne peut pas se soulever dans la direction verticale (z),
**caractérisé en ce que**
au moins un adaptateur de liaison (34) est disposé dans la zone du premier point de vissage (16) ou du deuxième point de vissage (18) et est un profil d'espacement.

2. Dispositif selon la revendication 1, l'au moins un élément de liaison (30 ; 130) comportant une section de maintien (30a ; 130a), au moyen de laquelle l'élément de liaison (30 ; 130) est relié au premier rail (12).

3. Dispositif selon l'une des revendications 1 à 2, l'au moins un élément de liaison (30 ; 130) comportant une section de liaison (30b ; 130b).

4. Dispositif selon l'une des revendications 1 à 3, la section de liaison (30b ; 130b) coopérant avec l'élément d'attache au sol (40).

5. Dispositif selon l'une des revendications 1 à 4, l'au moins un élément de liaison (230) étant réalisé intégralement avec le côté inférieur du premier rail (12).

6. Dispositif selon la revendication 1, l'au moins un élément de liaison (230) comprenant une ouverture de liaison (230a) réalisée dans le côté inférieur du premier rail (12), dans laquelle l'élément d'attache au sol (40) peut être introduit au moins par endroits.

7. Dispositif selon la revendication 1, l'au moins un élément de liaison (230) comportant une butée de liaison (230b), laquelle coopère avec l'élément d'attache au sol (40).

8. Dispositif selon l'une des revendications 6 à 7, la butée de liaison (230b) étant réalisée sur un bord d'ouverture de l'ouverture de liaison (230a).

9. Dispositif selon l'une des revendications 1 à 8, l'au moins un élément d'attache au sol (40) comportant un corps de base (42) et au moins deux sections de bride (44 ; 46) espacées l'une de l'autre axialement et reliées au corps de base (42), l'élément de liaison (30 ; 130 ; 230) entourant l'au moins un élément d'attache au sol (40) entre les deux sections de bride (44 ; 46) par un coulissement du premier rail (12) le long d'une direction longitudinale (x) et/ou parvenant en appui avec le corps de base (42).

10. Dispositif selon l'une des revendications 1 à 9, le système de réglage longitudinal (10) comportant au moins un deuxième rail (14) disposé de manière à pouvoir coulisser par rapport au premier rail (12) et un entraînement à broche (20) disposé entre le premier rail (12) et le deuxième rail (14) destiné à faire coulisser le deuxième rail (14) par rapport au premier rail (12).

11. Dispositif selon la revendication 10, l'au moins un élément de liaison (30 ; 130 ; 230) étant disposé, vu dans une direction transversale (y), sous la broche (22) du système de réglage longitudinal (10).

12. Véhicule avec un dispositif selon la revendication 1 de fixation d'un système de réglage longitudinal (10) sur une structure (F) de véhicule du véhicule.
